# DEMANDE DE BREVET EUROPEEN

(11) **EP 4 706 357 A1**
(43) Date de publication de la demande: **11.03.2026**
(21) Numéro de dépôt: 25197075.2
(22) Date de dépôt: 20.08.2025
(51) Int. Cl.: A01B 39/18, A01B 63/111

(54) **DISPOSITIF DE BINAGE DESTINÉ À ÊTRE TRACTÉ, COMPRENANT UN PARALLÉLOGRAMME DÉFORMABLE PORTANT AU MOINS UN ÉLÉMENT DE BINAGE**

(30) Priorité: 02.09.2024 FR 2409329
(71) Demandeur: Binnove, 47390 Layrac (FR)
(72) Inventeur: Jansingh, Nicolaas, 32700 Sempesserre (FR)
(74) Mandataire: Lequien, Philippe

(57) **Abrégé**

L'invention concerne un dispositif de binage comprenant :
- un bâti (1) destiné à être attelé à un véhicule pour tracter le dispositif de binage ;
- un parallélogramme déformable (2) comprenant une poutre supérieure (20) et une poutre inférieure (21) portant au moins un outil de binage (3) ainsi que des moyens de roulement au sol, lesdites poutres étant reliées par au moins une paire de bielles (22), les bielles (22) s'étendant d'une poutre à l'autre en étant inclinées, de la poutre supérieure (20) à la poutre inférieure (21), vers l'avant selon un sens de déplacement en avant du dispositif de binage,
- un organe de liaison (5) étant intercalé entre le bâti (1) et le parallélogramme déformable

## Description

### Domaine Technique

Le domaine de l'invention est celui de la conception et de la fabrication des machines agricoles. Plus précisément, l'invention concerne un dispositif de binage destiné à être tracté par un véhicule, conçu en particulier mais non exclusivement pour le travail des sols durs.

### État de la technique

Le binage est une opération de désherbage au voisinage de plantations, visant à favoriser le développement desdites plantations, ceci en éliminant le captage parasite de l'eau par les mauvaises herbes et en optimisant la pénétration de l'eau dans le sol en direction des racines des plantations.

Pour l'agriculture, des matériels de binage ont été développés pour être spécifiquement adaptés aux cultures semées en ligne (maïs, betterave...), permettant d'effectuer le binage entre les rangs de plans fraîchement sortis de terre, éventuellement simultanément entre plusieurs lignes de plants.

On distingue principalement deux types de bineuse, à savoir, les bineuses à dents et les bineuses à étoiles. Dans les deux cas, le principe est le même : des éléments de binage travaillent entre les lignes de culture de façon à pénétrer de quelques centimètres la terre, en vue de passer sous les racines ou au travers de celles-ci et d'arracher les mauvaises herbes, ceci en laissant derrière le passage de la bineuse une série de sillons.

Dans certains cas, le travail de la bineuse est rendu particulièrement difficile, soit du fait de la dureté du sol (sol particulièrement sec) soit du fait de la présence de cailloux.

Or, en présence de ces sols durs, la difficulté principale est de parvenir à garder les éléments de binage dans la terre, alors que ceux-ci ont naturellement tendance à s'en retirer, du fait d'un retrait vers le haut du dispositif de binage.

En effet, selon une conception classique des bineuses, les éléments de binage sont portés par la poutre inférieure (horizontale) d'un parallélogramme déformable, la poutre inférieure étant reliée à la poutre supérieure du parallélogramme par deux bielles inclinées vers l'avant (selon le sens de déplacement de la bineuse), en allant de la poutre inférieure vers la poutre supérieure.

En pratique, avec une telle conception, lorsque la bineuse rencontre un frein ou un obstacle, les éléments de binage exercent une force vers l'arrière sur la poutre inférieure, qui a tendance à basculer vers l'arrière par rapport à la poutre supérieure, se traduisant par un déplacement vers le haut des éléments de binage (d'où leur retrait du sol). Sur le plan cinématique, cela s'explique par le fait que l'extrémité supérieure des biellettes est fixe sur la poutre supérieure, tout en constituant un axe de pivotement autour duquel la biellette tourne selon un déplacement en arc de cercle.

Pour éviter ce phénomène de retrait, une technique répandue consiste à alourdir le parallélogramme de la bineuse pour maintenir les dents dans le sol.

Cette technique ne donne pas toujours entière satisfaction, et trouve en tout état de cause ses limites en présence de sols particulièrement durs.

Pour résoudre ce problème, et permettre le maintien des éléments de binage dans le sol en toutes circonstances, notamment lors du travail de terrains durs, il a été proposé la solution décrite dans le brevet d'invention publié sous le numéro EP2880969. Dans cette solution, l'orientation des bielles reliant la poutre supérieure à la poutre inférieure du parallélogramme est inversée par rapport à celle de la technique précédemment décrite. En effet, les bielles présentent une orientation vers l'avant en allant de la poutre supérieure à la poutre inférieure. Ceci fait réagir le parallélogramme lors du travail d'un terrain dur ou en présence d'obstacle de telle sorte que la poutre inférieure pivote verrière l'arrière du dispositif. Ce pivotement tend à écarter la poutre inférieure de la poutre supérieure ce qui se traduit par un déplacement vers le bas de la poutre inférieure, tendant à maintenir les éléments de binage dans le sol, voire à augmenter légèrement leur distance de pénétration dans le sol.

Cette solution est particulièrement satisfaisante dans la qualité du travail fourni, et dans le comportement dynamique du dispositif de binage quant à sa capacité à maintenir voire renforcer le maintien des éléments de binage dans le sol. Cette solution est également satisfaisante en ce qu'elle présente une conception robuste et simple, minimisant la maintenance nécessaire à son maintien opérationnel.

Depuis la proposition de cette solution, de nouveaux besoins ont émergés notamment relatifs à la possibilité d'éviter le binage de certaines zones sans pour autant avoir à dérouter le véhicule équipé du dispositif de binage.

### Problème technique

L'invention a notamment pour objectif de répondre à ce besoin.

Plus précisément, l'invention a pour objectif de proposer un dispositif de binage présentant une bonne capacité de maintenir voire renforcer le maintien des éléments de binage dans le sol, et la capacité à ne pas réaliser un binage à l'aide des outils de binage portés par parallélogramme déformable sans pour autant avoir à dérouter le véhicule équipé du dispositif de binage.

L'invention a également pour objectif de fournir un tel dispositif qui soit robuste et simple pour minimiser la maintenance nécessaire à son maintien opérationnel.

### Résumé de l'invention

Ces objectifs, ainsi que d'autres qui apparaîtront par la suite, sont atteints grâce à l'invention qui a pour objet un dispositif de binage comprenant :
- un bâti destiné à être attelé à un véhicule pour tracter le dispositif de binage ;
- un parallélogramme déformable comprenant une poutre supérieure et une poutre inférieure portant au moins un outil de binage ainsi que des moyens de roulement au sol, lesdites poutres étant reliées par au moins une paire de bielles, les bielles s'étendant d'une poutre à l'autre en étant inclinées, de la poutre supérieure à la poutre inférieure, vers l'avant selon un sens de déplacement en avant du dispositif,
- un organe de liaison étant intercalé entre le bâti et le parallélogramme déformable ;
caractérisé en ce que la poutre supérieure est mobile par rapport au bâti entre une position relevée vers le bâti et une position abaissée vers un sol, la poutre supérieure étant montée à rotation sur l'organe de liaison autour d'un axe de rotation s'étendant orthogonalement à un axe longitudinal de la poutre supérieure et situé au niveau d'une extrémité avant de la poutre supérieure, et en ce que le dispositif de binage comprend un vérin hydraulique double effet comprenant un corps monté à rotation sur l'organe de liaison et une tige dont l'extrémité distale est montée à rotation sur un point d'ancrage de la poutre supérieure, le point d'ancrage étant situé le long de la poutre supérieure et à distance de l'extrémité avant de la poutre supérieure, le vérin hydraulique étant en position étendue dans la position abaissée de la poutre supérieure.

Grâce au montage en rotation de la poutre supérieure par son extrémité avant à l'organe de liaison, et au vérin hydraulique, le parallélogramme déformable peut être relevé, retirant ainsi le ou les outils de binage du sol, par le biais du passage de la poutre supérieure de sa position abaissée à sa position relevée. De cette manière, à l'approche d'une zone où un binage ne doit pas être réalisé, l'utilisateur du dispositif peut simplement déclencher le retrait des outils de binage sans avoir nécessairement à dérouter son véhicule.

L'orientation vers l'avant des bielles en allant de la poutre supérieure à la poutre inférieure, tend à faire réagir le parallélogramme lors du travail d'un terrain dur ou en présence d'obstacle de telle sorte que la poutre inférieure pivote vers l'arrière du dispositif. Un tel pivotement tend à écarter la poutre inférieure de la poutre supérieure, ce qui se traduit par un déplacement vers le bas de la poutre inférieure qui tend à maintenir les éléments de binage dans le sol, voire à augmenter légèrement leur distance de pénétration dans le sol. Ainsi, les éléments de binage ne se retirent pas du sol en cas de terrain dur ou d'obstacle mais au contraire, maintiennent, voire augmentent, leur niveau de profondeur dans le sol en cas de résistance notable.

La conception de l'organe de liaison et du vérin hydraulique, combine ses effets avec ceux du parallélogramme déformable agencé de la façon précédemment décrite. La combinaison de ces effets permet d'obtenir un comportement dynamique optimisé du dispositif de binage quant à sa capacité à maintenir les outils de binage enfoncés dans le sol. Plus précisément, la conception du parallélogramme déformable crée, lors du binage, une contre force s'exerçant sur la poutre supérieure selon une direction allant de l'avant vers l'arrière, avec potentiellement une composante verticale évolutive en fonction de la nature du sol ou de la présence d'obstacle. Le vérin hydraulique reprend alors une partie de ces efforts qui pourraient avoir tendance à faire faire tourner la poutre supérieure autour de son axe de rotation sur l'organe de liaison. L'usage et l'intégration du vérin hydraulique permet de reprendre de manière optimisée ces efforts grâce à sa tige qui est dans sa position étendue, et donc butée, empêchant un abaissement de l'extrémité arrière de la poutre supérieure, et qui lutte contre un relèvement de l'extrémité arrière de la poutre supérieure grâce au liquide remplissant l'une des chambres du corps de vérin pour le maintenir dans sa position étendue.

Selon une caractéristique préférée, le vérin hydraulique est monté à rotation sur l'organe de liaison autour d'un axe de rotation décalé à l'opposé d'un axe d'extension de la tige du vérin hydraulique par rapport à un axe longitudinal de la poutre supérieure.

Cette caractéristique permet de diminuer l'encombrement produit par le vérin hydraulique au-dessus du parallélogramme déformable en le ramenant vers la poutre supérieure.

Préférentiellement, le point d'ancrage est situé au moins au-delà du tiers de la longueur de la poutre supérieure à partir de l'extrémité avant de la poutre supérieure.

La reprise d'effort par le vérin hydraulique est ainsi renforcée.

Selon une conception préférée, l'organe de liaison comprend deux joues entre lesquelles sont insérées l'extrémité avant de la poutre supérieure et une base du corps du vérin hydraulique.

Ceci participe à la compacité des moyens permettant de relever le parallélogramme déformable.

Préférentiellement, le vérin hydraulique présente un berceau sur lequel la base du corps de vérin est montée fixe, le berceau étant monté basculant autour de l'axe de rotation décalé sur les joues.

L'invention a également pour objet un ensemble de binage, caractérisé en ce qu'il comprend une pluralité de dispositif de binage tel que décrit précédemment, les dispositifs de binage partageant un unique bâti, les parallélogrammes déformables de chaque dispositif de binage s'étendant dans des plans parallèles les uns aux autres, le vérin hydraulique de chaque dispositif de binage étant actionnable indépendamment du ou des vérins des autres dispositifs de binage.

Grâce à cet ensemble de binage, il est possible de ne relever les outils de binage que d'une seule partie des dispositifs de binage, en fonction des besoins relatifs au terrain sur lequel évolue le véhicule.

Par exemple, à l'approche d'une bordure de terrain, l'utilisateur du véhicule peut commander le relevage des dispositifs de binage qui doivent circuler au niveau de la bordure, tout en laissant les autres dans le sol pour réaliser un binage. L'utilisateur n'a alors pas nécessairement besoin de modifier le trajet de son véhicule pour contourner une telle bordure.

L'invention a également pour objet un véhicule agricole, caractérisé en ce qu'il porte un dispositif de binage tel que décrit précédemment.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en perspective d'un dispositif de binage selon l'invention ;
- la figure 2 est une représentation schématique en coupe longitudinale médiane d'un bâti, de l'organe de liaison, et du parallélogramme déformable du dispositif de binage selon l'invention.

### Description détaillée

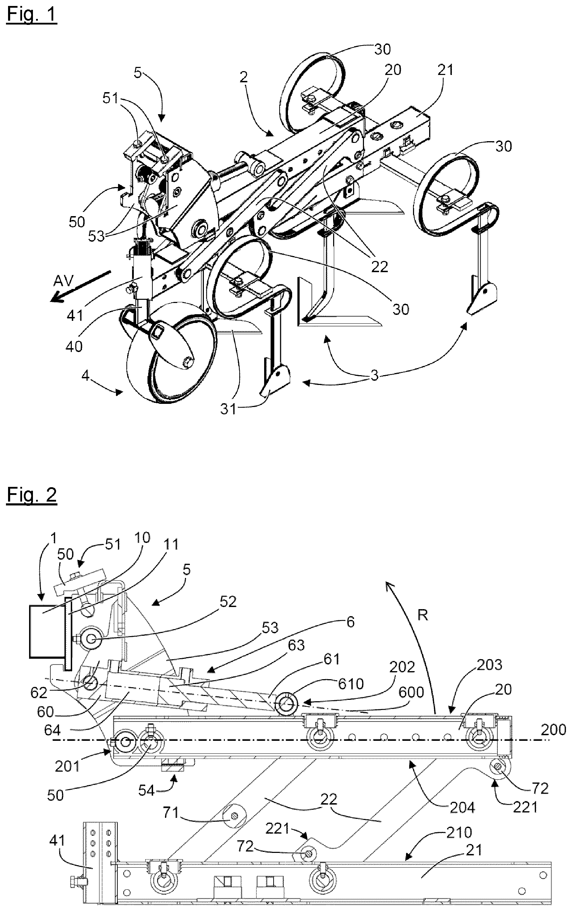

En référence à la figure 1, un dispositif de binage selon l'invention est représenté.

Ce dispositif de binage est destiné à être tracté par un véhicule.

En référence à la figure 2, le dispositif de binage comprend un bâti 1, susceptible d'être couplé à un véhicule tel qu'un tracteur agricole.

À cet effet, le bâti 1 présente un support intermédiaire 10 prenant par exemple la forme d'une poutrelle s'étendant transversalement à un axe longitudinal du dispositif de binage, et une platine 11 couplée au support intermédiaire.

Tel que détaillé par la suite, au moins une partie du reste du dispositif de binage est couplé au bâti 1 pour pouvoir être tracté, et réaliser le travail de binage, par le véhicule.

Tel que cela est évoqué par la suite, plusieurs dispositifs de binage peuvent être associés pour former un ensemble de binage. Dans ce cas, le bâti 1 est partagé, et forme un bâti unique. Le bâti 1 présente alors une pluralité de platine 11 réparties le long du support intermédiaire 10.

Le dispositif de binage comprend également :
- un parallélogramme déformable 2 ;
- un organe de liaison 5 du parallélogramme déformable 2 au bâti 1 ;
- un vérin hydraulique 6 double effet.

En référence aux figure 1 et 2, cet organe de liaison 5 est intercalé entre le bâti 1 et le parallélogramme déformable 2. L'organe de liaison 5 est conçu pour assurer la transmission de l'effort de traction du bâti 1 vers le parallélogramme déformable, mais également pour permettre un relevage R du parallélogramme déformable 2 par rapport au bâti 1 en coopération avec le vérin hydraulique 6 double effet.

Le parallélogramme déformable 2 est constitué par un ensemble comprenant :
- une poutre supérieure 20 ;
- une poutre inférieure 21 ;
- au moins une paire de bielles 22, et notamment deux paires de bielles situées de part et d'autre des poutres, les bielles étant chacune reliée de façon articulée par l'une de ses extrémités à la poutre supérieure 20 et, par l'autre de ses extrémités, à la poutre inférieure 21.

Tel que cela apparaît sur la figure 1, la poutre inférieure 21 porte :
- une pluralité d'outils de binage 3 ;
- des moyens de roulement au sol du dispositif de binage.

Ces moyens de roulement sont constitués en l'occurrence par une roue de terrage 4 portée par un bras 40 inséré réglable en hauteur dans un fourreau 41 solidaire du parallélogramme déformable 2 en partie avant de celui-ci, en s'étendant à partir de la poutre inférieure 21 de façon à positionner la roue de terrage 4 sensiblement à l'aplomb du bâti 1 selon le présent mode de réalisation.

Selon un mode de réalisation préféré, les outils de binage sont constitués par des dents 31 présentes à l'extrémité d'organes élastiquement déformables 30 prenant la forme d'un S. Ces organes en S sont d'un type connu et permettent d'engendrer un phénomène de vibrations au niveau de la dent dans le sol.

Le dispositif de binage peut présenter une série d'outil de binage dont le nombre peut varier autant que de besoin.

Selon un mode de réalisation illustré par la figure 1, le dispositif porte cinq outils de binage, dont un positionné dans l'alignement des poutres du parallélogramme déformable, tandis que les autres sont portés chacun par un bras 30, de façon à décaler latéralement les outils de binage par rapport à la dent alignée.

Le parallélogramme déformable 2 du dispositif est constitué de la façon suivante : les bielles 22 s'étendent d'une poutre à l'autre en étant inclinées vers l'avant selon le sens de déplacement en avant AV du dispositif (ou en d'autres termes en direction du bâti du dispositif), ceci de la poutre supérieure 20 à la poutre inférieure 21. Il en résulte que chaque bielle 22 présente une extrémité arrière articulée sur la poutre supérieure 20 et une extrémité avant articulée sur la poutre inférieure 21.

Ainsi, avec un dispositif selon l'invention, partant d'une configuration telle que celle illustrée par la figure 1 dans laquelle la poutre supérieure et la poutre inférieure présentent entre elles un écartement de base correspondant à une profondeur des outils de binage dans le sol (et dans laquelle les dents occupent une position en hauteur sous le niveau de la roue de terrage 4), lorsque le dispositif évolue en terrain dur et/ou rencontre un obstacle (de nature à provoquer le phénomène décrit ci-après), les éléments du dispositif vont réagir de la façon suivante:
- la roue de terrage va conserver voire augmenter son appui à la surface du sol, maintenant la poutre inférieure du parallélogramme à une hauteur prédéterminée ;
- la résistance s'exerçant sur la ou les dents des outils de binage va provoquer un basculement de la poutre inférieure vers l'arrière du dispositif (les bielles 22 pivotant autour de leur articulation sur la poutre supérieure, décrivant au niveau de leur articulation sur la poutre inférieure un arc de cercle vers l'arrière du dispositif), se traduisant par une « ouverture » du parallélogramme déformable tendant à abaisser la poutre inférieure par rapport à la poutre supérieure ;

Le maintien des dents des outils de binage à une profondeur voulue dans le sol est donc maintenu, voire légèrement augmenté en cas de sol dur ou d'obstacle dans le sol.

En référence à la figure 2, le dispositif de binage comprend des butées de déplacement de la poutre supérieure 20 par rapport à la poutre inférieure 21.

Les butées de déplacement comprennent :
- une première butée 71 portée le long des bielles 22 située vers l'avant du dispositif ;
- deux secondes butées 72 portées par les autres bielles 22 situées vers l'arrière du dispositif.

La première butée 71 prend la forme d'un cylindre s'étendant longitudinalement entre les deux parties centrales des bielles 22 avant situées de part et d'autre du parallélogramme déformable 2.

Les secondes butées 72 sont quant à elles portées par des extrémités en crochet 221 des bielles 22 arrière. Ces bielles 22 arrière présentent en effet un profil en S avec des extrémités en crochet 221 orientées vers l'intérieur du parallélogramme déformable 2.

De manière similaire la première butée 71, les deux secondes butées 72 s'étendent longitudinalement respectivement entre les extrémités en crochet 221 des deux bielles arrière couplées à la poutre supérieure 20, et entre les extrémités en crochet 221 des deux bielles arrière couplées à la poutre inférieure 21.

Dans la configuration d'écartement maximal des deux poutres l'une par rapport à l'autre illustrée par la figure 2, la face supérieure 210 de la poutre inférieure est en butée contre la seconde butée 72 portée entre les extrémités en crochet 221 couplées à la poutre inférieure des bielles arrière, tandis que la face inférieure 204 de la poutre supérieure 20 est en butée contre la seconde butée 72 portée entre les extrémités en crochet 221 couplées à la poutre supérieure 20 des bielles arrière.

Dans la configuration rabattue l'une contre l'autre des deux poutres, toutes les butées, notamment la première butée 71 et les secondes butées 72, sont alors en contact contre la face inférieure 204 de la poutre supérieure 20 et la face supérieure 210 de la poutre inférieure 21.

L'organe de liaison 5, et plus généralement la liaison du parallélogramme déformable 2 au bâti 1, sont décrits ci-après en référence aux figures 1 et 2.

L'organe de liaison 5 comprend une mâchoire 50 destinée à être refermée sur la platine 11. Pour ce faire, des boulons 51 permettent de resserrer l'un des mors de la mâchoire 50 vers un autre mors qui est fixe sur l'organe de liaison.

L'organe de liaison 5 comprend deux joues 53.

Ces deux joues 53 s'étendent parallèlement l'une par rapport à l'autre. La mâchoire 50 est partiellement formée par ces deux joues 53. Les deux joues 53 servent de support au parallélogramme déformable 2 et au vérin hydraulique 6 double effet.

Tel qu'évoqué précédemment, le parallélogramme déformable 2 est relevable sur le bâti 1.

En effet, la poutre supérieure 20 est mobile par rapport au bâti 1 entre une position relevée vers le bâti 1 et une position abaissée vers un sol (position illustrée sur la figure 2).

La poutre supérieure 20 est plus précisément montée à rotation sur l'organe de liaison 5 autour d'un axe de rotation 50.

Cet axe de rotation 50 est porté par les deux joues 53 de l'organe de liaison 5.

L'axe de rotation 50 s'étend orthogonalement à un axe longitudinal 200 de la poutre supérieure 20 et situé au niveau d'une extrémité avant 201 de la poutre supérieure 20. L'extrémité avant 201 de la poutre supérieure 20 correspond à l'extrémité de la poutre supérieure située le plus près de l'organe de liaison 5.

Cet axe de rotation 50 s'étend notamment perpendiculairement aux deux joues 53. En effet, l'extrémité avant 201 de la poutre supérieure 20 est insérée entre les deux joues 53.

Tel qu'évoqué précédemment, le dispositif de binage comprend un vérin hydraulique 6 double effet.

Le vérin hydraulique 6 comprend :
- un corps 60 ;
- une tige 61 montée coulissante dans le corps 60, le long d'un axe d'extension 500 de la tige 61 ;
- un piston 63 monté dans un logement cylindrique ménagé dans le corps 60 et solidaire de la tige 61.

Le vérin hydraulique présente deux orifices d'alimentation situés aux extrémités du logement cylindrique. Le piston 63 forme deux chambres 64 dans le logement cylindrique et chaque orifice d'alimentation découche dans l'une des deux chambres.

En fonction de la direction de travail choisie, un liquide est alimenté dans l'une des deux chambres 64 afin de repousser le piston 63. Dans la position illustrée sur la figure 2, la chambre 64 derrière le piston 63 par rapport à la tige 61 est complétement alimentée et le piston 63 et la tige 61 sont complétement repoussés, le vérin hydraulique étant alors dans une position étendue.

Le corps 60 est monté à rotation sur l'organe de liaison 5.

Plus précisément, le vérin hydraulique 6 présente un berceau 62 sur lequel la base 60 du corps 60 de vérin est montée fixe.

Ce berceau 62 s'étend orthogonalement à l'axe d'extension 600 de la tige 61 depuis le corps 60 de vérin, jusqu'à une extrémité par lequel le berceau 62 est monté basculant sur les deux joues 53. La base du corps 60 de vérin et le berceau 62 sont insérés entre les deux joues 53.

Le berceau 62 s'étend notamment orthogonalement à l'axe d'extension 600 à l'opposé du parallélogramme déformable 2 par rapport à l'axe d'extension 600 de la tige 61.

A une partie distale de la base du corps 60 de vérin, le berceau 62 est ainsi monté basculant par l'intermédiaire d'un axe de rotation décalé 52 sur les joues 53.

Plus généralement, le vérin hydraulique 6 est monté à rotation sur l'organe de liaison 5 autour de l'axe de rotation décalé 52 qui est situé à l'opposé de l'axe d'extension 600 de la tige 61 du vérin hydraulique 6 par rapport à l'axe longitudinal 200 de la poutre supérieure 20.

La tige 61 du vérin hydraulique 6 présente quant à elle une extrémité distale 610 par laquelle le vérin hydraulique est couplé à la poutre supérieure 20.

L'extrémité distale 610 est notamment montée à rotation sur un point d'ancrage 202 de la poutre supérieure 20.

Ce point d'ancrage 202 est porté sur une face supérieure 203 de la poutre supérieure 20.

Le point d'ancrage 202 est situé le long de la poutre supérieure 20, à distance de l'extrémité avant 201 de la poutre supérieure 20.

Grâce à cette conception, le vérin hydraulique 6 est en position étendue dans la position abaissée de la poutre supérieure 20.

Tel que cela est illustré, le point d'ancrage 202 est situé au moins au-delà du tiers de la longueur de la poutre supérieure 20 à partir de l'extrémité avant 201 de la poutre supérieure 20, et préférentiellement avant la moitié de la longueur de la poutre supérieure 20.

Cette configuration optimise la capacité de reprise de charge offerte par le vérin hydraulique 6 double effet afin de contrebalancer les efforts résultant d'un binage et qui se transmettent dans le parallélogramme déformable 2, la cinématique de relevage R de la poutre supérieure 20, tout en limitant l'encombrement du vérin hydraulique 6.

En outre, l'organe de liaison 5 présente une butée de fin de course 54 à son extrémité inférieure. Cette butée de fin de course s'étend entre les deux joues 53 et présente une surface plane contre laquelle la face inférieure 204 de la poutre supérieure 20 vient en appui dans la position abaissée de la poutre supérieure 20. Cette butée de fin de course 54 agit en synergie avec le vérin hydraulique 6 pour maintenir la poutre supérieure 20 dans sa position abaissée.

Tel qu'évoqué précédemment, un ensemble de binage peut être formé à l'aide d'une pluralité de dispositifs de binage. Dans ce cas, les parallélogrammes déformables des dispositifs de binage s'étendent tous parallèlement les uns aux autres. De plus, le vérin hydraulique 6 de chaque dispositif de binage est actionnable indépendamment des vérins hydrauliques 6 des autres dispositifs de binage.

Un système de commande permet ainsi de sélectionner les parallélogrammes déformables à relever afin de réaliser un binage partiel sous l'ensemble de binage.

L'invention concerne également le véhicule qui tracte un dispositif de binage tel que précédemment décrit, ou qui tracte un ensemble de binage.

Le ou les vérins hydrauliques 6 précédemment décrit sont destinés à être raccordés à un circuit hydraulique d'un véhicule tractant le dispositif de binage. Il est néanmoins envisageable que le dispositif de binage, ou l'ensemble de binage emporte son propre circuit hydraulique intégrant un moteur hydraulique et des moyens de contrôle de l'alimentation en fluide sous pression des vérins hydrauliques 6.

Le dispositif de binage précédemment décrit forme une solution foncièrement robuste et simple à entretenir, tout en présentant la capacité de limiter au moins partiellement un binage réalisé sans avoir à modifier le déplacement d'un véhicule tractant le dispositif de binage.

Selon un exemple d'application, un véhicule de type tracteur agricole peut tracter un ensemble de binage présentant plus d'une dizaine de dispositifs de binages. Si le véhicule passe à proximité d'une bordure de terrain entrant dans le volume couvert par l'ensemble de binage, les dispositifs de binage situés au niveau de la bordure peuvent être relevés dès qu'ils arrivent au niveau de la bordure, puis abaissés dès que la bordure est passée. Ceci permet au tracteur agricole de continuer d'avance en ligne droite. Le relevage et l'abaissement des dispositifs de binage peuvent être réalisés à l'aide d'une commande manuelle, mais également par le biais d'un automatisme pouvant par exemple intégrer un plan indiquant les zones à ne pas biner et une géolocalisation du véhicule.

## Revendications

1. Dispositif de binage comprenant :
- un bâti (1) destiné à être attelé à un véhicule pour tracter le dispositif de binage ;
- un parallélogramme déformable (2) comprenant une poutre supérieure (20) et une poutre inférieure (21) portant au moins un outil de binage (3) ainsi que des moyens de roulement au sol, lesdites poutres étant reliées par au moins une paire de bielles (22), les bielles (22) s'étendant d'une poutre à l'autre en étant inclinées, de la poutre supérieure (20) à la poutre inférieure (21), vers l'avant selon un sens de déplacement en avant du dispositif de binage,
- un organe de liaison (5) étant intercalé entre le bâti (1) et le parallélogramme déformable (2) ;
**caractérisé en ce que** la poutre supérieure (20) est mobile par rapport au bâti (1) entre une position relevée vers le bâti (1) et une position abaissée vers un sol, la poutre supérieure (20) étant montée à rotation sur l'organe de liaison (5) autour d'un axe de rotation (50) s'étendant orthogonalement à un axe longitudinal (200) de la poutre supérieure (20) et situé au niveau d'une extrémité avant (201) de la poutre supérieure (20),
et **en ce que** le dispositif de binage comprend un vérin hydraulique (6) double effet comprenant un corps (60) monté à rotation sur l'organe de liaison (5) et une tige (61) dont l'extrémité distale (610) est montée à rotation sur un point d'ancrage (202) de la poutre supérieure (20), le point d'ancrage (202) étant situé le long de la poutre supérieure (20) et à distance de l'extrémité avant (201) de la poutre supérieure (20), le vérin hydraulique (6) étant en position étendue dans la position abaissée de la poutre supérieure (20).

2. Dispositif de binage selon la revendication précédente, **caractérisé en ce que** le vérin hydraulique (6) est monté à rotation sur l'organe de liaison (5) autour d'un axe de rotation décalé (52) à l'opposé d'un axe d'extension (600) de la tige (61) du vérin hydraulique (6) par rapport à l'axe longitudinal (200) de la poutre supérieure (20).

3. Dispositif de binage selon la revendication précédente, **caractérisé en ce que** le point d'ancrage (202) est situé au moins au-delà du tiers de la longueur de la poutre supérieure (20) à partir de l'extrémité avant (201) de la poutre supérieure (20).

4. Dispositif de binage selon l'une quelconque des revendications précédentes, **caractérisé en ce que** l'organe de liaison (5) comprend deux joues (53) entre lesquelles sont insérées l'extrémité avant (201) de la poutre supérieure (20) et une base du corps (60) du vérin hydraulique (6).

5. Dispositif de binage selon les revendications 2 et 4, **caractérisé en ce que** le vérin hydraulique (6) présente un berceau (62) sur lequel la base (60 du corps (60) de vérin est montée fixe, le berceau (62) étant monté basculant autour de l'axe de rotation décalé (52) sur les joues (53).

6. Ensemble de binage, **caractérisé en ce qu'**il comprend une pluralité de dispositif de binage selon l'une quelconque des revendications précédentes, les dispositifs de binage partageant un unique bâti (1), les parallélogrammes déformables (2) de chaque dispositif de binage s'étendant dans des plans parallèles les uns aux autres, le vérin hydraulique (6) de chaque dispositif de binage étant actionnable indépendamment du ou des vérins hydrauliques (6) des autres dispositifs de binage.

7. Véhicule agricole, **caractérisé en ce qu'**il porte un dispositif de binage selon l'une quelconque des revendications 1 à 5.
